Europäisches Patentamt

European Patent Office

Office européen des brevets

(19)

(11) Publication number: **0 200 694**
**A2**

# EUROPEAN PATENT APPLICATION

(21) Application number: **86850133.9**

(22) Date of filing: **15.04.86**

(51) Int. Cl.⁴: **B65G 25/04**

(30) Priority: **22.04.85 SE 8501937**

(43) Date of publication of application:
**10.12.86 Bulletin 86/45**

(84) Designated Contracting States:
**AT BE CH DE FR GB IT LI LU NL SE**

(71) Applicant: **TOLLO SYSTEM AB**
**Estrids Väg 11**
**S-291 65 Kristianstad(SE)**

(72) Inventor: **Andreasson, Sune**
**Estrids väg 11**
**S-291 65 Kristianstad(SE)**

(74) Representative: **Ferkinghoff, Claes-Göran et al**
**ALFONS HEDBERGS PATENTBYRA AB**
**Aschebergsgatan 35**
**S-411 33 Göteborg(SE)**

(54) A profiled rail with belt-drive controlled crab carriage/carriages.

(57) Profiled rail including a number of conveyor belt driven crab carriages. The device is preferably suspended from a ceiling or a framework structure and it is devised to transport loads or to provide a linear pre-programmed functional movement, for instance of a positioning device. This is achieved therein that the crab carriage/carriages are integral parts of the endless conveyor belt and are positioned in the interior of the profiled rail so as to be displaced in the lengthwise direction of the profiled rail.

Fig.1

EP 0 200 694 A2

## A Profiled Rail with Belt-drive Controlled Crab Carriage/Carriages

The subject invention concerns a device by means of which a load may be displaced linearly or by means of which a pre-programmed functional movement, for instance in a positioning device, may be used to effect a programme of linear movements to handle goods or components in a manufacturing process. The device is constructed on the basis of a profiled rail in which one or several crab carriages are mounted for longitudinal movement along the rail by means of an endless belt conveyor of which the crab carriages form integral parts, whereby the crab carriages may be displaced and positioned in accordance with a predetermined programme.

Linear movements are essential parts of the manufacturing and material handling processes and programmes in industry and the transportation sector. In many cases, the material handling is effected by conveyance of the goods by means of transport devices which are attached in the ceiling or on steel scaffolding. Such systems permit the floor space of the premises to be left cleared and unencumbered and to be used for pallet-supported components etc. Already existing linear transport systems consist of conveyors the crab carriages of which travel along an open rail and are driven by an endless belt. The system is adequate when the requirements are limited to carriages and drive belts that may operate unprotected and the requirement on distinction of the movements and standstill of the carriages is not absolute.

When more exactness of movement and standstill conditions is required screw-motion or hydraulically driven systems have hitherto been the only alternatives. These systems are limited by respectively the technical possibilities of screw mounting and by the maximum stroke that it is possible to obtain in a piston-and-cylinder unit.

The device in accordance with the invention is based on a closed profiled rail and uses an endless belt drive system to convey the carriages, which system is devised to remove the limitations inherent in screw drive and hydraulic drive mechanisms.

The invention is characterized in that said profiled rail is closed and formed with an attachment means in the form of T-shaped groove, a number of crab carriages being positioned in the closed interior of said rail for conveyance in the lengthwise direction of the rail by means of the endless conveyor belt, which belt is driven from a pulley and the extension of which may be adjusted by means of an opposite pulley, the crab carriage/carriages arranged to support loads and being guided against the inner faces of the profiled rail, in the vertical plane with the aid of rollers and in the horizontal plane with the aid of support rollers.

The length of prior-art device is limited to between 3 and 4 meters, which should be compared with the belt drive length of up to 15 meters that it is possible to obtain with the system of the subject invention while retaining distinction of the crab carriage movement and standstill conditions. Because the belt drive and the crab carriages are enclosed inside the profiled rail they are protected against soiling and they cannot pollute the environment. For this reason the device in accordance with the invention may advantageously be used for instance within the food industry, or in applications where the surrounding atmosphere is aggressive.

The simple and continuous suspension of the profiled rail provides considerable possibilities of variation, for instance as concerns points of attachment and adjustment to the maximum loads for which the device is intended.

The invention, its characteristics and advantages will be further described in the following with reference to the accompanying drawings on which one exemplary embodiment is shown. It should be understood, however, that the invention should not be regarded as limited to the shown embodiment but that a number of modifications are possible within the scope of the appended claims.

In the drawings,

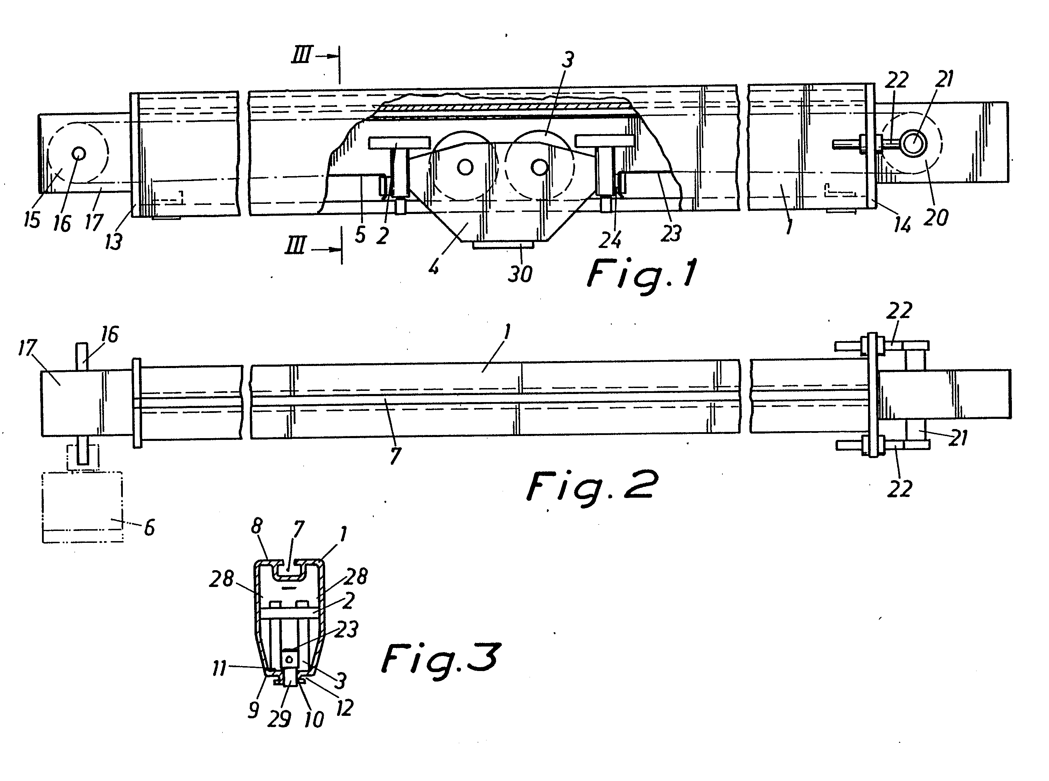

Fig. 1 is a lateral view of the device, showing the crab carriage in exposed condition,

Fig. 2 shows the device in a view from above, and

Fig. 3 is a sectional view of the profiled rail and the carriage.

The profiled rail 1 which is a low-weight rail with high tensile strength, is the main component of the device. One or several crab carriages 4 provided with guide rollers and support rollers 2 and 3, respectively, are arranged to be conveyed linearly along the rail since these components form integral parts of an endless conveyor belt 5 which is driven by a motor 6.

The self-supporting profiled rail 1 is manufactured and bent to shape from a low-weight material and is formed with an inverted T-shaped groove or channel 7 adjacent its upper delimitation wall 8, by means of which the device is suspended, for instance with the aid of screws and nuts, in an overhead support. The lower wall 9 of the rail or beam is shaped with a track 10 which is delimited on either side by a profiled section in the beam forming the rolling or sliding surface 11 on which the crab carriages 4 travel. The track 10 encloses a space 12 housing cables, if used, in a protected condition. End walls 13 and 14 are provided at each end of the beam and in one of the end walls 13 is mounted a pulley 15 the shaft 16 of which is enclosed in a cover 17 which also is the point of connection of a motor 6. In the opposite end wall 14 is mounted a pulley 20 which is adjustable in the lengthwise direction of the profiled rail and which allows the conveyor belt 5 to be tensioned by means of set screws 22 which act on the pulley shaft 21.

In the interior of the profiled rail 1 the crab carriage/carriages 4 are conveyed in a linear movement by an endless conveyor belt 5 about the pulleys 15 and 20, the crab carriages 4 forming integral parts of the conveyor belt. The belt 23 is fixedly attached to the crab carriages 4 at both ends thereof in attachment points 24. The crab carriages 4 include a number of rollers 3 which run in the roller tracks 11 formed inside the profiled member 1 and which absorb the vertical load exerted on the device, and also a number of support rollers 2 which guide the carriages 4 laterally against the inner faces 28 of the profiled rail 1, as well as lower rollers 29 designed to provide guidence against the side faces of the track 10. At the lower part of the crab carriage/carriages 4 an attachment means 30 is provided for connection thereto of various kinds of implements and equipment.

Because of the comparatively large height dimensions of the profiled rail 1 compared to its width dimensions and because of the T-shaped groove 7 formed at the upper face together with the profiled configuration of the lower channel 12, providing a concentration of material, the device obtains considerable strength and durability.

**Claims**

1. A device including belt-drive controlled crab carriage/carriages for conveyance of a load or for performing linear functional movements, e.g. in a positioning device, said crab carriage/carriages forming an integral part of an endless conveyor belt and being displaced in the lengthwise direction of a rail upon operation of said conveyor belt **characterized** in that said profiled rail (1) is closed and formed with an attachment means in the form of a T-shaped groove (7), a number of crab carriages - (4) being positioned in the closed interior of said rail for conveyance in the lengthwise direction of the rail by means of the endless conveyor belt (5), which belt is driven from a pulley (15) and the extension of which may be adjusted by means of an opposite pulley (20), the crab carriage/carriages (4) arranged to support loads and being guided against the inner faces (28) of the profiled rail, in the vertical plane with the aid of rollers (2) and in the horizontal plane with the aid of support rollers (3).

2. A device as claimed in claim 1, **characterized** therein that the driven linear movement of said device is achieved in that the rotary motion of the drive mechanism of the device is transformed by the endless conveyor belt (5) into a linear drive motion acting in the direction of the profiled rail(1).

3. A device as claimed in claims 1 and 2, **characterized** therein that the endless conveyor belt is arranged to be structurally and functionally independent of the length of the movements performed and consequently the device may be formed with a long rail and for long movements.

4. A device as claimed in claims 1 and 2 **characterized** therein that the profiled rail (1) together with the crab carriage/carriages (4) and the conveyor belt (5) form a closed unit, preventing dirt from penetrating into the drive system and the carriages while at the same time the external faces of the profiled rail are easy to keep clean.

Fig.1

Fig.2

Fig.3